# EUROPEAN PATENT APPLICATION

(11) **EP 4 564 374 A1**
(43) Date of publication of application: **04.06.2025**
(21) Application number: 23307114.1
(22) Date of filing: 01.12.2023
(51) Int. Cl.: G21C 3/356, G21C 3/352

(54) **NUCLEAR FUEL ASSEMBLY SPACER GRID**

(71) Applicant: FRAMATOME, 92400 Courbevoie (FR)
(72) Inventor: BLAVIUS, Dirk, 91058 ERLANGEN (DE); SCHNABEL, Holger, 91341 ROETTENBACH (DE); Schmidt, Hagen, 91481 MÜNCHSTEINACH (DE); SEIDEL, Marc-Oliver, 91336 HEROLDSBACH (DE)
(74) Representative: Lavoix

(57) **Abstract**

This nuclear fuel assembly spacer grid (16) defines a lattice of cells (20) for receiving fuel rods (18), wherein the spacer grid (16) comprises a peripheral band (22) composed of at least one peripheral strip (26) delimiting a portion of a peripheral contour (24) of the spacer grid (16), wherein at least one peripheral strip (26) defines a protruding protrusion (28). The protruding protrusion (28) further comprises a reinforcing part, the thickness of the protrusion (28) being superior to the thickness of the peripheral strip (26)

## Description

The present invention relates to the field of spacer grids configured for receiving fuel rods to form a fuel assembly of a nuclear power plant. The present invention relates in particular to a nuclear fuel assembly spacer grid defining a lattice of cells for receiving fuel rods, wherein the spacer grid comprises a peripheral band composed of at least one peripheral strip delimiting a portion of a peripheral contour of the spacer grid, wherein at least one peripheral strip defines a protruding protrusion.

In the domain of spacer grids, one knows to have a peripheral band comprising a protruding protrusion. Such protrusions are generally configured to cooperate with a fuel assembly support of the nuclear power plant and contribute for example in an accurate positioning of the fuel assembly in the nuclear power plant.

Known protrusions of such spacer grids are typically obtained by stamping a strip that forms a peripheral strip of the spacer grid. Such stamped protrusions allow the peripheral grid to cooperate with other elements of the nuclear power plant, such as for example the fuel assembly support, at defined location.

Such known spacer grids are however not entirely satisfying. Indeed, spacer grids are generally arranged in an environment exposed to vibrations. This generally leads to a gradual wear of the protrusions, which may in turns lead to forming openings in the spacer grid. This can lead to a degradation of the intended function of the spacer grid protrusions.

Known solutions comprise the use of spacer grids using thicker peripheral bands. However, such spacer grids reduce neutronic efficiency around the fuel rods or cause higher pressure loss of the component, leading to reduced performance of the fuel assembly comprising the spacer grid.

A goal of the invention is therefore to obtain a spacer grid which improves the performance and longevity of the spacer grid protrusions, thus maintaining the as designed mechanical behavior of the fuel assembly.

To that end, the invention relates to a nuclear fuel assembly spacer grid as above mentioned, wherein the protruding protrusion further comprises a reinforcing part, the thickness of the protrusion being superior to the thickness of the peripheral strip.

Such a spacer grid is especially advantageous since the reinforcing part of the protruding protrusion prevents the degradation of the intended function of the peripheral band of the spacer grid without increase of the thickness for the entire peripheral band and thus without significant reduction of the neutronic efficiency around the fuel rods and increased pressure loss of the component. This leads to improving the mechanical behavior of the fuel assembly without compromising its performances.

According to specific embodiments of the invention, the spacer grid further comprises one or several of the features mentioned below, considered independently or along any technically possible combination:
- the spacer grid comprises at least one positioning spring elastically deformable and formed in the peripheral strip, the at least one peripheral strip defining the protruding protrusion on the positioning spring;
- each peripheral strip of the peripheral band defines at least two protruding protrusions;
- the protruding protrusion protrudes from the spacer grid away from the lattice of cells;
- the protruding protrusion is formed by the superposition of the reinforcing part and of the peripheral strip;
- the peripheral strip comprises a dimple defining a cavity, the reinforcing part being arranged in the cavity or on the peripheral strip, opposed to the cavity, to form the protruding protrusion;
- the reinforcing part is welded on the peripheral strip;
- the reinforcing part is riveted on the peripheral strip;
- the reinforcing part is obtained by milling and/or additive manufacturing and/or stamping; and
- the peripheral strip comprises an orifice and the reinforcing part comprises a projecting portion, the projecting portion being engaged in the orifice to form the protruding protrusion.

Other features and advantages of the invention will become apparent from a detailed description which is given thereof below, as an indication and by no means as a limitation, with reference to the appended figures, wherein:
- Figure 1 is a schematic top view of a nuclear fuel assembly spacer grid according to the invention;
- Figure 2 is a schematic lateral view of the spacer grid of figure 1, and more particularly of the peripheral strip of such a spacer grid;
- Figure 3 is a schematic section view, along a section plane A-A, of a detail of peripheral strip of a spacer grid according to a first embodiment of the invention;
- Figure 4 is a schematic view similar to the view of Figure 3 of a peripheral strip of a spacer grid according to a second embodiment of the invention;
- Figure 5 is a schematic view similar to the view of Figures 3 and 4 of a peripheral strip of a spacer grid according to a third embodiment of the invention;
- Figure 6 is a schematic view similar to the view of Figures 3 to 5 of a peripheral strip of a spacer grid according to a fourth embodiment of the invention; and
- Figure 7 is a schematic view similar to the view of Figures 3 to 6 of a peripheral strip of a spacer grid according to a fifth embodiment of the invention.

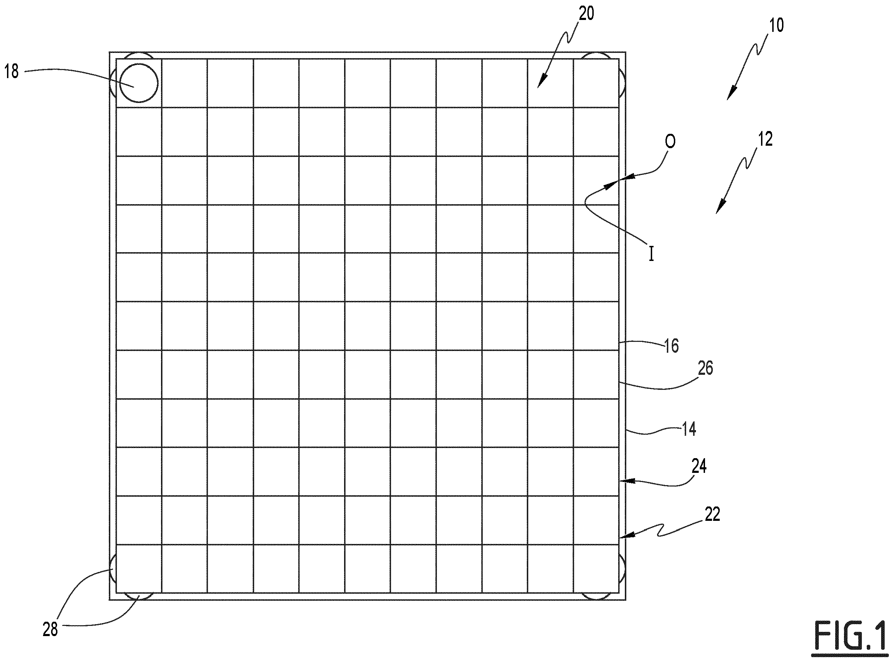

Referring to figure 1, a nuclear reactor 10 is represented. The nuclear reactor 10 is for example a Pressurized Water Reactor (abbreviated PWR). In other examples, the nuclear reactor 10 is a Boiling Water Reactor (abbreviated BWR) or a Water Water Energy Reactor (abbreviated WWER or VVER).

As visible from figure 1, the nuclear reactor 10 comprises a nuclear fuel assembly 12 and comprises for example a fuel assembly support 14.

The fuel assembly support 14 is for example configured to position the nuclear fuel assembly 12 in the nuclear reactor 10. For example, the fuel assembly support 14 is dedicated to position the nuclear fuel assembly 12 in the nuclear power plant 10. In other example, the fuel assembly support 14 corresponds to any part of the nuclear power plant cooperating with the nuclear fuel assembly 12.

As illustrated on figure 1, the nuclear fuel assembly 12 comprises a nuclear fuel assembly spacer grid 16, called hereinafter spacer grid 16, and comprises for example fuel rods 18, arranged in the spacer grid 16. For clarity purposes, only one fuel rod is illustrated on figure 1.

As illustrated in figure 1, the spacer grid 16 defines a lattice of cells 20 for receiving the fuel rods 18. For example, and as illustrated for one fuel rod 18 in figure 1, the cells 20 are configured to host and maintain fuel rods 18 in the spacer grid 16. The spacer grid 16 defines for example a lattice of between 5 and 50 cells in a first direction and between 5 and 50 cells in a second direction. In the example of figure 1, the spacer grid 16 defines a lattice of eleven cells in a first direction and of eleven cells in another direction, such spacer grid 16 defining 121 cells.

Each cell 20 defines for example a cell direction C-C', each fuel rod 18 being arranged in a cell 20 such that the fuel rod 18 is elongated along the cell direction C-C'.

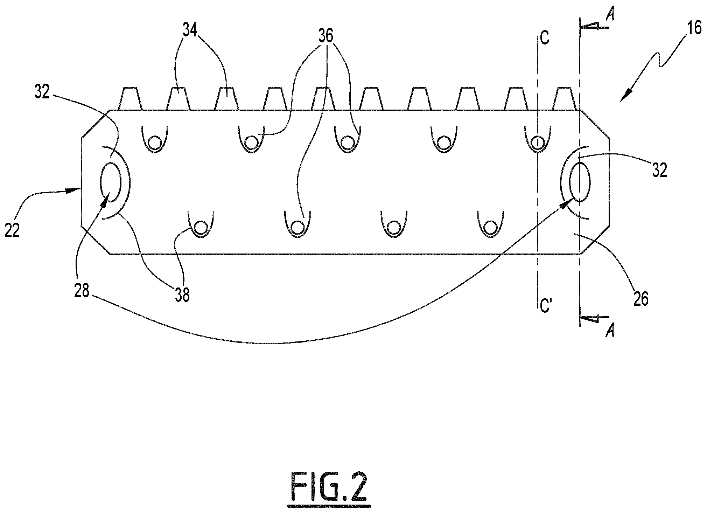

As visible from figure 1 and as illustrated in more details on figure 2, the spacer grid 16 comprises a peripheral band 22 delimiting a peripheral contour 24 of the spacer grid 16.

The peripheral band 22 comprises for example at least one peripheral strip 26, the or each peripheral strip 26 defining a portion of the peripheral contour 24 of the spacer grid 16.

In the example presented in figures 1 and 2, the peripheral band 22 comprises four peripheral strips 26, fastened between them to form the peripheral band 22. The peripheral strips 26 are for example welded between them to form the peripheral band 22.

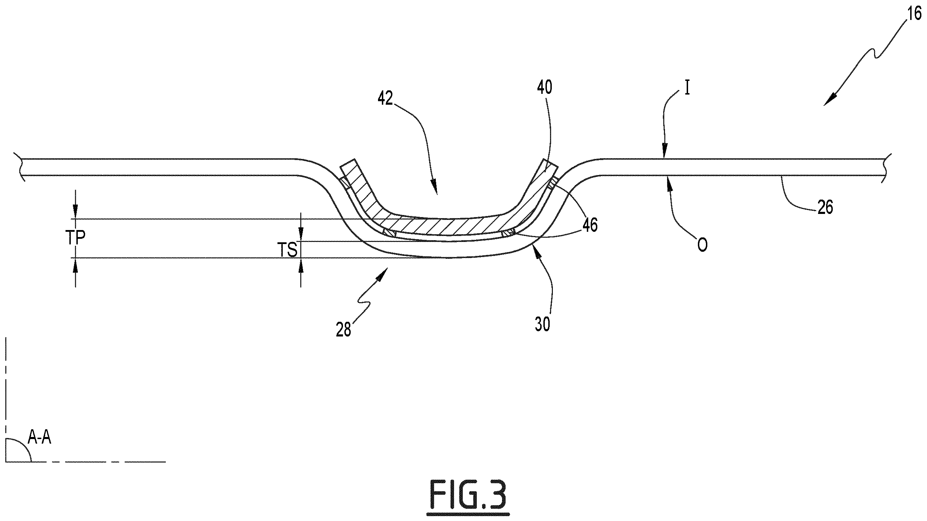

As illustrated in figures 1 and 2, and as presented in more details in figures 3 to 7, the peripheral strip 26 defines a protruding protrusion 28. In some examples, the peripheral strip 26 comprises at least a dimple 30 and/or an orifice 31. The peripheral strip 26 also comprises for example at least one positioning spring 32 and at least one guiding projection 34. In the example presented in figure 2, the peripheral strip 26 further comprises a fuel rod spring 36.

As illustrated in figure 2, the guiding projections 34 project from the rest of the peripheral band 22 along the cell direction C-C'. The guiding projections are for example extending in the continuity of the rest of the peripheral band 22. Furthermore, the guiding projections 34 are for example bent inwards toward the lattice of cells 20. The guiding projections 34 are for example configured to guide and/or maintain the fuel rods in the spacer grid 16 and are for example configured to extend at least partially between two adjacent fuel rods 18.

The positioning spring 32 and the fuel rod spring 36 are for example formed in the peripheral strip 26. The positioning spring 32 and the fuel rod springs are elastically deformable. The peripheral strip 26 comprises for example a slit 38, for example of curved shape, the or each slit defining a positioning spring 32 or a fuel rod spring 36. The positioning springs 32 and the fuel rod springs 36 thus for example comprise a tongueshaped portion of the peripheral strip 26.

The fuel rod springs 36 are for example configured to cooperate with the fuel rods arranged in cells 20 adjacent to such springs 36. In the example of figure 2, the peripheral strip 26 comprises nine fuel rods spring 36 that are configured to cooperate with nine fuel centered relative to the peripheral strip 26.

The positioning spring 32 is for example configured to cooperate with the nuclear reactor 10 to support the nuclear fuel assembly 12 in the reactor 10. For example, the positioning spring is configured to cooperate with the fuel assembly support 14 as presented in figure 1. As visible from figures 1 and 2, each peripheral strip 26 comprises for example two positioning springs 32. In this example, the positioning springs 32 of each peripheral strips 26 are arranged at opposed ends of the peripheral strip 26.

As presented above, the protruding protrusion 28 is defined by the peripheral strip 26. In other words, the protruding protrusion 28 comprises a portion of the peripheral strip 26.

As illustrated in figures 3 to 7, the protruding protrusion 28 further comprises a reinforcing part 40. The protruding protrusion 28 is for example formed by the superposition of the reinforcing part 40 and of the peripheral strip 26. For example, the protruding protrusion is formed by the reinforcing part 40 and the portion of the peripheral strip 26 which is adjacent and/or in contact with the reinforcing part 40.

The thickness TP of the protrusion 28 is superior to the thickness TS of the peripheral strip. For example, as visible from figures 3 to 6, the thickness TP of the protrusion corresponds to the sum of the thickness TS of the peripheral strip 26 and of the thickness of the reinforcing part 40.

The thickness TP of the protrusion 26 is for example between 1,5 and 5 times bigger than the thickness TS to the peripheral strip 26.

As presented on figures 1 and 2, each peripheral strip 26 of the peripheral band 22 comprises for example at least two protruding protrusions 28. In particular, in the example of figures 1 and 2, each peripheral strip 26 of the peripheral band comprises two protruding protrusions 28. In this example, the protruding protrusions 28 are arranged at opposed ends of the peripheral strip 26.

The protruding protrusion 28 protrudes for example from the peripheral band 22, that is, from the rest of the peripheral band 22, inwardly or outwardly. In the example of figure 1, the protrusions protrude from the spacer grid 16 outwardly, that is away from the lattice of cells 20. In this example, the protruding protrusions 26 protrude towards the fuel assembly support 14 to cooperate with the fuel assembly support 14.

In the example of figure 1, the at least one peripheral strip 26 defines the protruding protrusion 28 on the positioning spring 32. In other words, the peripheral strip 26 comprises a protrusion arranged on the positioning spring 32, for example outwardly protruding for cooperating with the fuel assembly support 14.

In another example, the at least one peripheral strip 26 defines the protruding protrusion 28 on the fuel rod spring 36. In other words, the peripheral strip 26 comprises a protrusion arranged on the fuel rod spring 36, for example inwardly protruding for cooperating with one of the fuel rods 18.

In another example, the at least one peripheral strip 26 defines the protruding protrusion 28 out of any spring 32, 36. For example, the peripheral strip does not comprise any positioning spring 32 and the protruding protrusions 28 are arranged similarly as presented in figure 2, except that no slit 38 defines positioning springs 32.

As this will be understood later, the reinforcing part 40 is for example obtained by milling and/or additive manufacturing and/or stamping.

The reinforcing part 40 is for example riveted and/or welded on the peripheral strip 26.

In an example, and as above-mentioned, the peripheral strip 26 comprises a dimple 30. The dimple 30 defines a cavity 42 and the reinforcing part 40 is for example arranged in the cavity 42 to form the protruding protrusion 28. In alternative, or in complement, the reinforcing part 40 is arranged on the peripheral strip 26, opposed to the cavity 42.

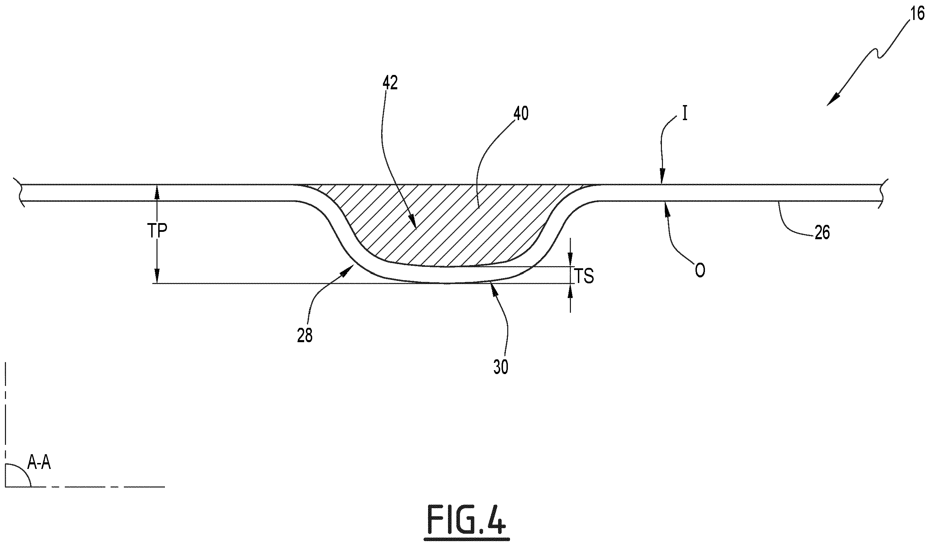

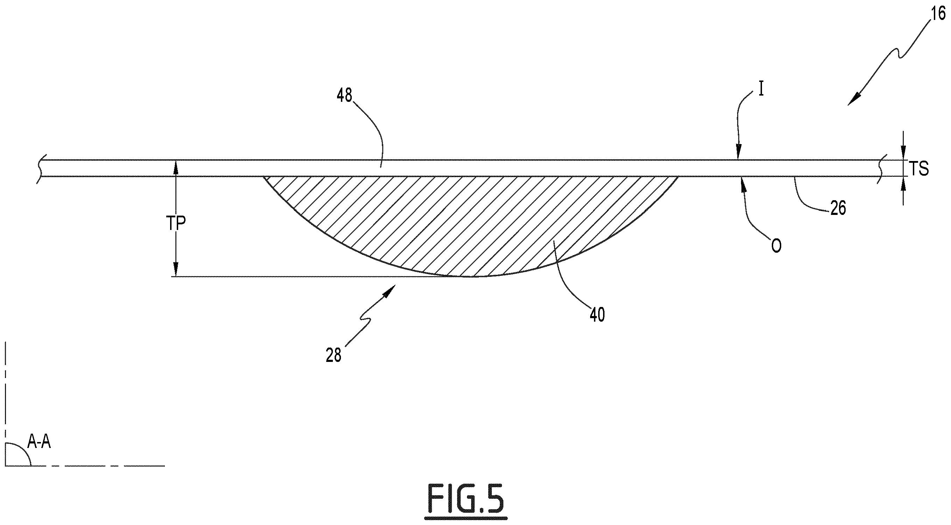

The reinforcing part is for example arranged on an inside face I of the peripheral strip 26, as illustrated for example on figures 3 and 4, or on an outside face O of the peripheral strip 26, as illustrated for example on figures 5, 6 and 7.

In an example, and as above-mentioned, the peripheral strip 26 comprises an orifice 31. The reinforcing part 40 then comprises a projecting portion 44, projecting from the rest of the reinforcing part 40. The projecting portion 44 is engaged in the orifice 31 to form the protrusion 28.

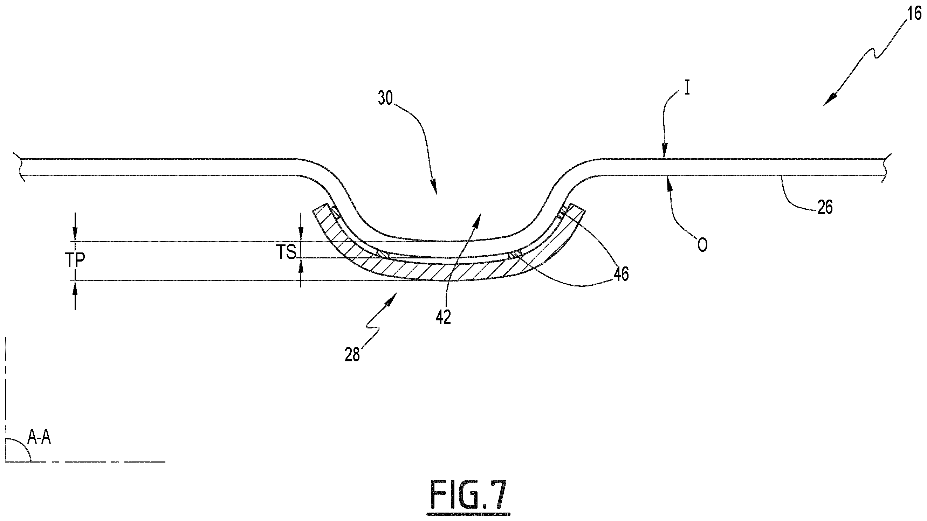

The examples of a spacer grid 16 of figures 3 and 7 will now be presented in more details. In such examples, the peripheral strip 26 comprises a dimple 30, for example stamped in the peripheral strip 26. The reinforcing part 40 is obtained by the stamping of a sheet of material such as for example stainless steel.

The reinforcing part 40 is then arranged in the cavity of the dimple 30, as illustrated in figure 3, or outside of the dimple 30, as illustrated in figure 7, to form the protruding protrusion 28.

As illustrated from figure 3 and figure 7, the reinforcing part is for example welded to the peripheral strip 26 along welding joints 46.

The example of a spacer grid 16 of figure 4 will now be presented. Only the elements differing for the spacer grid 16 of figure 3 will be presented. The analogous elements bear the same references.

In the example of figure 4, the peripheral strip 26 also comprises a dimple 30. In this example, the reinforcing part 40 is however obtained by additive manufacturing.

The shape of the reinforcing part is for example complementary to the shape of the cavity 42.

The reinforcing part is then for example welded in the cavity 42. In this example, the reinforcing part is formed directly in the cavity 40.

The example of a spacer grid 16 of figure 5 will now be presented. Only the elements differing for the spacer grid 16 of figures 3 and 4 will be presented. The analogous elements bear the same references.

In the example of figure 5, the peripheral strip 26 does not comprise any dimple 30. The reinforcing part is arranged on a substantially flat portion 48 of the peripheral strip 26.

In this example, the reinforcing part 40 is for example obtained by additive manufacturing.

The reinforcing part 40 is for example welded on the peripheral strip or formed directly on the peripheral strip 26.

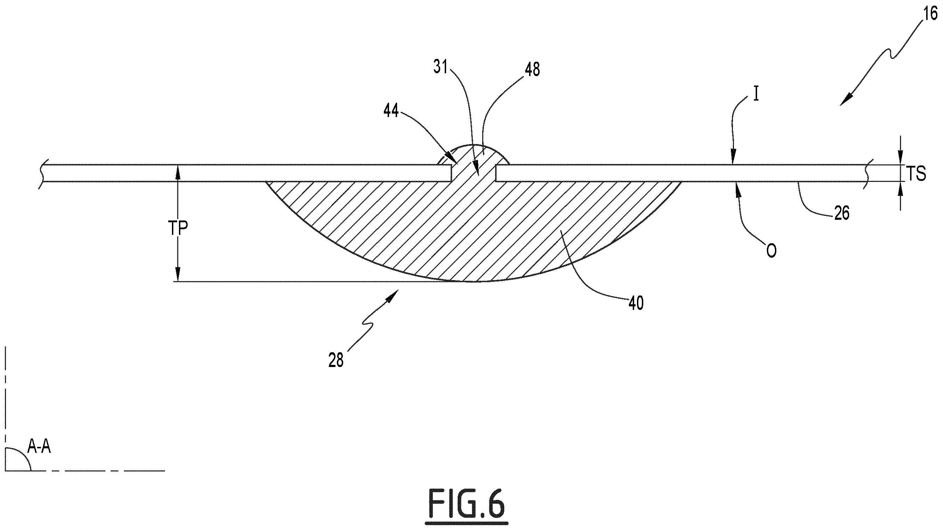

The example of a spacer grid 16 of figure 6 will now be presented. Only the elements differing for the spacer grid 16 of figures 3 to 5 will be presented. The analogous elements bear the same references.

In this example, the peripheral strip 26 comprises an orifice 31 and the reinforcing part 40 comprises a projecting portion 44.

In this example, the reinforcing part 40 is for example obtained by additive manufacturing and machining.

The projecting portion 44 of the reinforcing part 40 is for example engaged in the orifice 31 of the peripheral trip 26 and the reinforcing part 40 is then welded on the peripheral strip 26, as illustrated from the welding bead illustrated on figure 6.

In some non-illustrated examples, the reinforcing part 40 is riveted on the peripheral strip 26 through the orifice 31.

As seen above, having protruding protrusions 28 further comprising a reinforcing part 40, and having the thickness TP of the protrusion 28 being superior to the thickness TS of the peripheral strip 26 is especially advantageous to maintain the performance and longevity of the peripheral strip 26 without compromising the performances of the fuel assembly 12, in particular by preventing a formation of holes in the peripheral strip.

Having the protruding protrusion 28 on the positioning spring 32 is especially advantageous for limiting the wear of the protrusions 28 and for improving the positioning of the nuclear fuel assembly 12.

Having at least two protruding protrusions 28 on the peripheral strip 26 and/or protrusions protruding away from the lattice of cells 20 further improves the positioning of the nuclear fuel assembly 12.

Arranging the reinforcing part 40 in the cavity 42 of a dimple 30 is especially advantageous to reinforce existing spacer grids 16.

The use of a reinforcing part 40 comprising a projecting portion 44 engaged in the orifice 31 of a peripheral strip 26 is especially advantageous since it ensures an easy fastening of the reinforcing part to the peripheral strip 26. Furthermore, when the reinforcing part 40 is welded on the peripheral strip 26, the welding is for example localized around the projecting portion 44, limiting the distortions resulting from the welding.

## Claims

1. Nuclear fuel assembly spacer grid (16) defining a lattice of cells (20) for receiving fuel rods (18),
wherein the spacer grid (16) comprises a peripheral band (22) composed of at least one peripheral strip (26) delimiting a portion of a peripheral contour (24) of the spacer grid (16),
wherein at least one peripheral strip (26) defines a protruding protrusion (28),
**characterized in that**
the protruding protrusion (28) further comprises a reinforcing part (40), the thickness (TP) of the protrusion (28) being superior to the thickness (TS) of the peripheral strip (26).

2. Nuclear fuel assembly spacer grid (16) according to claim 1, wherein the spacer grid (16) comprises at least one positioning spring (32) elastically deformable and formed in the peripheral strip (26), the at least one peripheral strip (26) defining the protruding protrusion (28) on the positioning spring (32).

3. Nuclear fuel assembly spacer grid (16) according to claims 1 or 2, wherein each peripheral strip (26) of the peripheral band (22) defines at least two protruding protrusions (28).

4. Nuclear fuel assembly spacer grid (16) according to any of the preceding claims, wherein the protruding protrusion (28) protrudes from the spacer grid (16) away from the lattice of cells (20).

5. Nuclear fuel assembly spacer grid (16) according to any of the preceding claims, wherein the protruding protrusion (28) is formed by the superposition of the reinforcing part (40) and of the peripheral strip (26).

6. Nuclear fuel assembly spacer grid (16) according to any of the preceding claims, wherein the peripheral strip (26) comprises a dimple (30) defining a cavity (42), the reinforcing part (40) being arranged in the cavity (42) or on the peripheral strip (26), opposed to the cavity (42), to form the protruding protrusion (28).

7. Nuclear fuel assembly spacer grid (16) according to any of the preceding claims, wherein the reinforcing part (40) is welded on the peripheral strip (26).

8. Nuclear fuel assembly spacer grid (16) according to any of the preceding claims, wherein the reinforcing part (40) is riveted on the peripheral strip (26).

9. Nuclear fuel assembly spacer grid (16) according to any of the preceding claims, wherein the reinforcing part (40) is obtained by milling and/or additive manufacturing and/or stamping.

10. Nuclear fuel assembly spacer grid (16) according to any of the preceding claims, wherein the peripheral strip (26) comprises an orifice (31) and the reinforcing part (40) comprises a projecting portion (44), the projecting portion (44) being engaged in the orifice (31) to form the protruding protrusion (28).
